(19) Europäisches Patentamt
European Patent Office
Office européen des brevets

(11) EP 4 775 629 A1

(12) # EUROPEAN PATENT APPLICATION
published in accordance with Art. 153(4) EPC

(43) Date of publication:
**15.07.2026 Bulletin 2026/29**

(21) Application number: **24862876.0**

(22) Date of filing: **05.09.2024**

(51) International Patent Classification (IPC):
***C08L 1/14*** *(2006.01)* ***C08L 5/00*** *(2006.01)*
***C08L 67/02*** *(2006.01)* ***C08L 67/04*** *(2006.01)*
***C08L 101/16*** *(2006.01)*

(52) Cooperative Patent Classification (CPC):
**C08L 1/14; C08L 5/00; C08L 67/02; C08L 67/04; C08L 101/16**

(86) International application number:
**PCT/JP2024/031912**

(87) International publication number:
**WO 2025/053227 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023 JP 2023143937**

(71) Applicant: **NEC Corporation**
**108-8001 Tokyo (JP)**

(72) Inventors:
- **SHIMURA, Midori**
**Tokyo 108-8001 (JP)**
- **TANAKA, Shukichi**
**Tokyo 108-8001 (JP)**

(74) Representative: **Vossius & Partner Patentanwälte Rechtsanwälte mbB**
**Siebertstraße 3**
**81675 München (DE)**

(54) **POLYSACCHARIDE-BASED BIOMASS PLASTIC, RESIN COMPOSITION FOR MOLDING USING SAME, AND MOLDED BODY**

(57) Provided are a polysaccharide-based biomass plastic that has marine biodegradability while also having favorable mechanical strength and thermoplasticity, a molding resin composition using the polysaccharide-based biomass plastic, and a molded body.

A polysaccharide-based biomass plastic composed of:
a polysaccharide derivative in which hydrogen atoms of hydroxy groups of polysaccharide (cellulose or paramylon) are substituted with a long-chain component that is a saturated aliphatic acyl group having 6 to 18 carbon atoms and a short-chain component that is an acyl group having 2 or 3 carbon atoms, a total of a degree of substitution with the short-chain component and a degree of substitution with the long-chain component being within a range of 2.4 to 2.6 for cellulose derivatives and being within a range of 1.6 to 2.3 for paramylon derivatives, and the degree of substitution with the long-chain component being equal to or more than 0.6; and
a biodegradable resin that is one or more selected from the group consisting of PBS, PBSA and PCL, wherein
a content of the polysaccharide derivative is 70 to 90 mass%, and
a content of the biodegradable resin is 10 to 30 mass%.



Processed by Luminess, 75001 PARIS (FR)

## Description

### Technical Field

The present disclosure relates to a polysaccharide-based biomass plastic, a molding resin composition using the polysaccharide-based biomass plastic, and a molded body.

### Background Art

In recent years, biomass plastics derived from plants have been considered important from the viewpoint of environmental load reduction and carbon neutral. In addition, due to the growing problem of marine plastic waste, attention to marine biodegradable plastics is also increasing. Examples of those biomass plastics with marine biodegradability that have been mass-produced include polyhydroxyalkanoate (PHA) resins produced by microorganisms and bio-based polybutylene succinate (Bio-PBS) resins. However, although exhibiting high biodegradability, these PHA resins and Bio-PBS resins are poor in durability and thus can be considered unsuitable for applications such as fishing gear and fishing nets, which require both marine biodegradability and durability.

Therefore, attention is being directed toward polysaccharide derivatives obtained by esterifying a hydroxyl group of a glucose ring in the polysaccharide with a fatty acid. For example, PTL 1 describes a β-1,3-glucan derivative obtained by introducing a long-chain aliphatic hydrocarbon group having equal to or more than 13 carbon atoms and a short-chain aliphatic hydrocarbon group having 1 to 5 carbon atoms or a phenyl group into β-1,3-glucan.

### Citation List

### Patent Document

Patent Document 1: JP 6029155 B2

### Summary of Invention

### Technical Problem

However, it has been known that polysaccharide derivatives exhibiting favorable mechanical strength and thermoplasticity generally do not exhibit biodegradability due to a high degree of hydroxyl group substitution. Therefore, there is a demand for polysaccharide-based biomass plastics that has marine biodegradability while also having favorable mechanical strength and thermoplasticity.

The object of the present disclosure is to provide a polysaccharide-based biomass plastic that has marine biodegradability while also having favorable mechanical strength and thermoplasticity, a molding resin composition using the polysaccharide-based biomass plastic, and a molded body.

### Solution to Problem

In order to achieve the above-described object, the present disclosure provides a polysaccharide-based biomass plastic composed of:

a cellulose derivative in which hydrogen atoms of hydroxy groups of cellulose are substituted with a long-chain component that is a saturated aliphatic acyl group having 6 to 18 carbon atoms and a short-chain component that is an acyl group having 2 or 3 carbon atoms, a total of a degree of substitution with the short-chain component ($DS_{Sh}$) and a degree of substitution with the long-chain component ($DS_{Lo}$) being within a range of 2.4 to 2.6, and the degree of substitution with the long-chain component ($DS_{Lo}$) being equal to or more than 0.6; and

a biodegradable resin that is one or more selected from the group consisting of polybutylene succinate, polybutylene succinate adipate, and polycaprolactone, in which

a content of the cellulose derivative is 70 to 90 mass% with respect to 100 mass% of a total content of the cellulose derivative and the biodegradable resin, and

a content of the biodegradable resin is 10 to 30 mass% with respect to 100 mass% of the total content of the cellulose derivative and the biodegradable resin.

Furthermore, the present disclosure provides a polysaccharide-based biomass plastic composed of:

a paramylon derivative in which hydrogen atoms of hydroxy groups of paramylon are substituted with a long-chain component that is a saturated aliphatic acyl group having 6 to 18 carbon atoms and a short-chain component that is an acyl group having 2 or 3 carbon atoms, a total of a degree of substitution with the short-chain component ($DS_{Sh}$) and a degree of substitution with the long-chain component ($DS_{Lo}$) being within a range of 1.6 to 2.3, and the degree of substitution with the long-chain component ($DS_{Lo}$) being equal to or more than 0.6; and

a biodegradable resin that is one or more selected from the group consisting of polybutylene succinate, polybutylene succinate adipate, and polycaprolactone, in which

a content of the paramylon derivative is 70 to 90 mass% with respect to 100 mass% of a total content of the paramylon derivative and the biodegradable resin, and

a content of the biodegradable resin is 10 to 30 mass% with respect to 100 mass% of the total content of the paramylon derivative and the biodegradable resin.

The present disclosure also provides a molding resin composition containing the polysaccharide-based biomass plastic, and a molded body formed using the molding resin composition.

Furthermore, the present disclosure provides a method for producing a polysaccharide-based biomass plastic, the method including:

preparing a cellulose derivative or a paramylon derivative by acylating hydroxy groups of cellulose or paramylon through reaction of the cellulose or the paramylon dispersed in a solvent with a short-chain acylating agent that is one or more selected from the group consisting of a fatty acid halide and an acid anhydride, each having 2 or 3 carbon atoms, and a long-chain acylating agent that is one or more selected from the group consisting of a saturated fatty acid halide and an acid anhydride, each having 6 to 18 carbon atoms, in presence of an acid scavenging component and under a heating condition; and

mixing the cellulose derivative or the paramylon derivative with a biodegradable resin to form an alloy.

Advantageous Effect of Invention

According to the present disclosure, it is possible to provide the polysaccharide-based biomass plastic that has marine biodegradability while also having favorable mechanical strength and thermoplasticity, a molding resin composition using the polysaccharide-based biomass plastic, and a molded body.

Example Embodiments

A biomass plastic is a polymer material that contains a substance derived from a renewable organic resource as a raw material and that is obtained by chemical or biological synthesis. Even in a case where a biomass plastic is incinerated, the carbon neutrality of biomass allows for a reduction in carbon dioxide emissions into the atmosphere as compared to petroleum-based resins, and the reduction of environmental load is thus expected.

<Polysaccharide-Based Biomass Plastic>

The polysaccharide-based biomass plastic of the present disclosure consists of a specific polysaccharide derivative (cellulose derivative or paramylon derivative) and a specific biodegradable resin. In the present disclosure, excellent marine biodegradability, impact strength, and thermoplasticity can be achieved by compounding a polysaccharide derivative and a biodegradable resin to form an alloy. Here, the term "compounding" refers to mixing another resin and an optional additive into a raw material resin, and processing the mixture into a resin that has a new appearance, physical properties, and a function. In addition, the phrase "to form an alloy" refers to a technique of mixing two or more kinds of raw materials to produce a raw material having properties that complement the characteristics of both materials. The polysaccharide-based biomass plastic of the present disclosure preferably has a biodegradation value equal to or more than 10% (relative to cellulose) after 3 months in a BOD test using seawater, and still more preferably 10% to 30%. The polysaccharide-based biomass plastic of the present disclosure has a Charpy impact strength of 5 $kJ/m^2$ or more, and has favorable mechanical strength.

The content of the specific polysaccharide derivative is 70 to 90 mass%, preferably 80 to 90 mass%, and still more preferably 83 to 90 mass% with respect to 100 mass% of the total content of the polysaccharide derivative and the biodegradable resin. When the content of the polysaccharide derivative is within the above-described range, the polysaccharide-based biomass plastic can have marine biodegradability while also having favorable mechanical strength and thermoplasticity. When the amount of the biodegradable resin is too small, a sufficient mechanical strength of a molded body may not be obtained, whereas an excessive amount of the biodegradable resin may cause crystallization (clouding), resulting in deterioration of the physical properties of the polysaccharide-based biomass plastic.

The content of the specific biodegradable resin is 10 to 30 mass%, preferably 10 to 20 mass%, and still more preferably 10 to 17 mass% with respect to 100 mass% of the total content of the polysaccharide derivative and the biodegradable resin. When the content of the biodegradable resin is within the above-described range, the polysaccharide-based biomass plastic can have marine biodegradability while also having favorable mechanical strength and thermoplasticity. When the content of the biodegradable resin is too large, the physical properties of the polysaccharide-based biomass plastic may be deteriorated due to crystallization (clouding). When the content of the biodegradable resin is too small, the mechanical strength of the molded body may be poor.

[Polysaccharide Derivative]

(1) Cellulose Derivative

A cellulose derivative according to the present disclosure is obtained by introducing a long-chain component and a short-chain component using hydroxy groups of cellulose. The cellulose derivative according to the present disclosure is a cellulose derivative in which hydrogen atoms of hydroxy groups of cellulose are substituted with a short-chain component that is an acyl group having 2 or 3 carbon atoms and a long-chain component that is a saturated aliphatic acyl group having 6 to 18 carbon atoms, in which the total of a degree of substitution with the short-chain component ($DS_{Sh}$) and a degree of substitution with the long-chain component ($DS_{Lo}$) is within a range of 2.4 to 2.6, and the degree of substitution with the long-chain component ($DS_{Lo}$) is equal to or more than 0.6.

(Cellulose)

Cellulose is a linear polymer in which β-D-glucose molecules (β-D-glucopyranose) represented by the following Formula (1) are polymerized by β(1→4) glycosidic bonds (in the formula, n represents a natural number). Each glucose unit that constitutes cellulose has three hydroxy groups. In the present disclosure, the short-chain component and the long-chain component can be introduced into such cellulose using these hydroxy groups.

[Chemical formula 1]

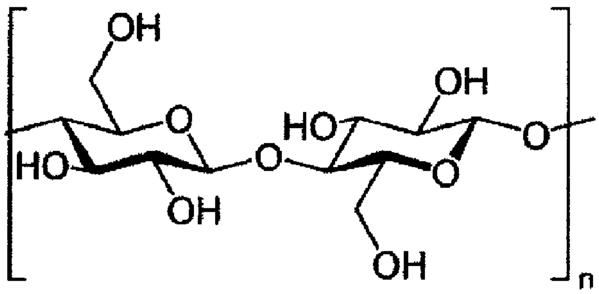

(1)

(Long-Chain Component)

Introduction of the long-chain component into cellulose in the cellulose derivative of the present disclosure enables modification of properties thereof, including improvements in, for example, water resistance, thermoplasticity, and mechanical strength. The long-chain component is a saturated aliphatic acyl group having 6 to 18 carbon atoms, preferably a linear saturated aliphatic acyl group having 6 to 18 carbon atoms, more preferably a linear saturated aliphatic acyl group having 6 to 12 carbon atoms, and still more preferably a linear saturated aliphatic acyl group having 6 carbon atoms. The long-chain component may be used singly or in combination of two or more kinds thereof.

The long-chain component is an acyl group derived from a long-chain acylating agent introduced in place of a hydrogen atom of a hydroxy group of cellulose. The long-chain component can be introduced by reacting a hydroxy group in cellulose with a long-chain acylating agent described later. A long-chain organic group of the long-chain component and a pyranose ring of the cellulose can be bonded via an ester bond.

(Short-Chain Component)

The polysaccharide derivative of the present disclosure can reduce the intermolecular force (intermolecular bonding) of cellulose by introducing the short-chain component into cellulose, and can enhance physical properties including mechanical strength such as elastic modulus, chemical resistance, and surface hardness. The short-chain

component is an acyl group having 2 or 3 carbon atoms (acetyl group or/and propionyl group), preferably contains at least an acetyl group, and particularly preferably contains only an acetyl group.

The short-chain component is an acyl group derived from a short-chain acylating agent introduced in place of a hydrogen atom of a hydroxy group of cellulose. The short-chain component can be introduced by reacting a hydroxy group in cellulose with a short-chain acylating agent described later. The short-chain organic group of the short-chain component and a pyranose ring of the cellulose can be bonded via an ester bond.

The degree of substitution with a long-chain component of cellulose ($DS_{Lo}$), that is, the average number of hydroxy groups (degree of hydroxyl group substitution), each of which is substituted with a long-chain component (saturated aliphatic acyl group having 6 to 18 carbon atoms) per glucose unit of cellulose is equal to or more than 0.6, preferably within a range of 0.8 to 2.0, and more preferably within a range of 1.0 to 1.8, from the viewpoint of achieving both mechanical strength and marine biodegradability. When $DS_{Lo}$ of the cellulose derivative is less than 0.6, the mechanical strength may be poor.

The total of the degree of substitution with a long-chain component of cellulose ($DS_{Lo}$) and the degree of substitution with a short-chain component ($DS_{Sh}$), that is, the average number of hydroxy groups (degree of hydroxyl group substitution), each of which is substituted with a short-chain component (acetyl group or/and propionyl group) per glucose unit of cellulose is within a range of 2.4 to 2.6, preferably within a range of 2.45 to 2.55, and more preferably within a range of 2.5 to 2.55, from the viewpoint of achieving both mechanical strength and marine biodegradability. When $DS_{Lo}$ or $DS_{Sh}$ of the cellulose derivative is too low, the mechanical strength of the produced resin may not be sufficient. In contrast, when $DS_{Lo}$ or $DS_{Sh}$ is too high, marine biodegradability may be reduced.

(2) Paramylon Derivative

A paramylon derivative according to the present disclosure is obtained by introducing a long-chain component and a short-chain component using hydroxy groups of paramylon. The paramylon derivative according to the present disclosure is a paramylon derivative in which hydrogen atoms of hydroxy groups of paramylon are substituted with a short-chain component that is an acyl group having 2 or 3 carbon atoms (acetyl group or/and propionyl group) and a long-chain component that is a saturated aliphatic acyl group having 6 to 18 carbon atoms; the total of a degree of substitution with the short-chain component ($DS_{Sh}$) and a degree of substitution with the long-chain component ($DS_{Lo}$) is within a range of 1.6 to 2.3, and the degree of substitution with the long-chain component ($DS_{Lo}$) is equal to or more than 0.6.

(Paramylon)

Paramylon is a linear polymer in which β-D-glucose molecules (β-D-glucopyranose) represented by the following Formula (2) are polymerized by β(1→3) glycosidic bonds (in the formula, n represents a natural number). Each glucose unit that constitutes paramylon has three hydroxy groups. In the present disclosure, the short-chain component and the long-chain component can be introduced into such paramylon using these hydroxy groups.

[Chemical formula 2]

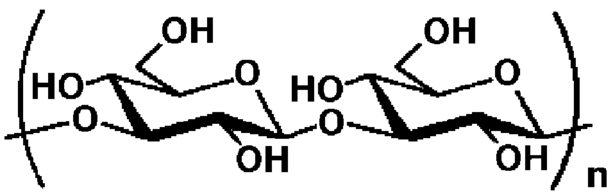

(2)

Paramylon is a main component of algae and is obtained by separating other components such as proteins from algae. Paramylon is a polysaccharide accumulated as a storage polysaccharide in Euglena, and is stored or consumed as an energy source depending on the environment such as nutritional conditions. Paramylon is composed of glucose alone, and it has been known that paramylon obtained from Euglena gracilis has an average degree of polymerization of about 700 to 750 in terms of glucose units.

(Long-Chain Component)

Introduction of the long-chain component into paramylon in the paramylon derivative of the present disclosure enables modification of properties thereof, including improvements in, for example, water resistance, thermoplasticity, and mechanical strength. The long-chain component is a saturated aliphatic acyl group having 6 to 18 carbon atoms, preferably a linear saturated aliphatic acyl group having 6 to 18 carbon atoms, more preferably a linear saturated

aliphatic acyl group having 6 to 12 carbon atoms, and still more preferably a linear saturated aliphatic acyl group having 6 carbon atoms. The long-chain component may be used singly or in combination of two or more kinds thereof.

The long-chain component is an acyl group derived from a long-chain acylating agent introduced in place of a hydrogen atom of a hydroxy group of paramylon. The long-chain component can be introduced by reacting a hydroxy group in paramylon with a long-chain acylating agent described later. A long-chain organic group of the long-chain component and a pyranose ring of the paramylon can be bonded via an ester bond.

(Short-Chain Component)

The paramylon derivative of the present disclosure can reduce the intermolecular force (intermolecular bonding) of paramylon by introducing the short-chain component into paramylon, and can enhance physical properties including mechanical strength such as elastic modulus, chemical resistance, and surface hardness. The short-chain component is an acyl group having 2 or 3 carbon atoms (acetyl group or/and propionyl group), preferably contains at least an acetyl group, and particularly preferably contains only an acetyl group.

The short-chain component is an acyl group derived from a short-chain acylating agent introduced in place of a hydrogen atom of a hydroxy group of paramylon. The short-chain component can be introduced by reacting a hydroxy group in paramylon with a short-chain acylating agent described later. The short-chain organic group of the short-chain component and a pyranose ring of the paramylon can be bonded via an ester bond.

The degree of substitution with a long-chain component of paramylon ($DS_{Lo}$), that is, the average number of hydroxy groups (degree of hydroxyl group substitution), each of which is substituted with a long-chain component (saturated aliphatic acyl group having 6 to 18 carbon atoms) per glucose unit of paramylon is equal to or more than 0.6, preferably within a range of 0.8 to 2.0, and more preferably within a range of 1.0 to 1.8, from the viewpoint of achieving both mechanical strength and marine biodegradability. When $DS_{Lo}$ of the paramylon derivative is less than 0.6, the mechanical strength may be poor.

The total of the degree of substitution ($DS_{Lo}$) with a long-chain component of paramylon and the degree of substitution with a short-chain component ($DS_{Sh}$), that is, the average number of hydroxy groups (degree of hydroxyl group substitution), each of which is substituted with a short-chain component (acetyl group or/and propionyl group) per glucose unit of paramylon is within a range of 1.6 to 2.3, preferably within a range of 1.7 to 2.2, and more preferably within a range of 1.7 to 2.1, from the viewpoint of achieving both mechanical strength and marine biodegradability. When $DS_{Lo}$ or $DS_{Sh}$ of the paramylon derivative is too low, the mechanical strength of the produced resin may not be sufficient. In contrast, when $DS_{Lo}$ or $DS_{Sh}$ is too high, marine biodegradability may be reduced.

[Method for Producing Polysaccharide-Based Resin (Cellulose-Based Resin and Paramylon-Based Resin)]

A cellulose-based resin and a paramylon-based resin (also described as a "polysaccharide-based resin") used in the present disclosure can be prepared, for example, by the following production method. Hereinafter, cellulose and paramylon are also referred to as "polysaccharides".

(Activation of Polysaccharide)

Before a reaction for introducing a long-chain component and a short-chain component into a polysaccharide (cellulose and/or paramylon), an activation treatment (pre-treatment) can be performed to increase the reactivity of the polysaccharide. As the activation treatment, a conventional activation treatment usually performed prior to acetylation of a polysaccharide can be applied.

In the activation treatment, for example, the polysaccharide is brought into contact with an activation solvent that is compatible with the polysaccharide by a wet method such as a method of spraying an activation solvent onto the polysaccharide or a method of immersing the polysaccharide in the activation solvent (immersion method) to swell the polysaccharide. As a result, the reactivity of the polysaccharide is improved because a reactant easily infiltrates between polysaccharide molecular chains (when a solvent or a catalyst is used, the reactant easily infiltrates between the polysaccharide molecular chains together with them). Examples of the activation solvent include water; carboxylic acids such as acetic acid, propionic acid, butyric acid, valeric acid, caproic acid, enanthic acid, caprylic acid, pelargonic acid, and stearic acid; alcohols such as methanol, ethanol, propanol, and isopropanol; nitrogen-containing compounds such as dimethylformamide, formamide, ethanolamine, and pyridine; and sulfoxide compounds such as dimethyl sulfoxide, and one or more of these may be used singly or in combination of two or more kinds thereof. Water, acetic acid, pyridine, and dimethyl sulfoxide can be used particularly preferably.

The activation can also be performed by charging the polysaccharide into a long-chain fatty acid. When the long-chain fatty acid has a melting point at or above room temperature, the cellulose can be heated to the melting point or higher.

The used amount of the activation solvent can be set to, for example, equal to or more than 10 parts by mass,

preferably equal to or more than 20 parts by mass, and more preferably equal to or more than 30 parts by mass with respect to 100 parts by mass of the polysaccharide. When the polysaccharide is immersed in the activation solvent, the used amount of the activation solvent can be set to, for example, equal to or more than 1 time, preferably equal to or more than 5 times, and more preferably equal to or more than 10 times the mass of the polysaccharide. The amount of the activation solvent is preferably equal to or less than 300 times, more preferably equal to or less than 100 times, and still more preferably equal to or less than 50 times the amount of the polysaccharide from the viewpoint of a burden of removing the activation solvent after the pretreatment, reduction in material cost, and the like.

The temperature of the activation treatment can be appropriately set, for example, in a range of 0°C to 100°C. From the viewpoint of activation efficiency and energy cost reduction, the temperature for the activation treatment is preferably 10°C to 40°C, and more preferably 15°C to 35°C.

When the polysaccharide is charged into the melted long-chain fatty acid, the polysaccharide can be heated to a temperature equal to or higher than the melting point of the long-chain fatty acid.

The time for the activation treatment can be appropriately set, for example, in a range of 0.1 hours to 72 hours. From the viewpoint of sufficiently activating the polysaccharide and reducing the treatment time, the time for the activation treatment is preferably 0.1 hours to 24 hours, and more preferably 0.5 hours to 3 hours.

After the activation treatment, the excess activation solvent can be removed by a solid-liquid separation method such as suction filtration, filter pressing, or compression.

After the activation treatment, the activation solvent contained in the polysaccharide can be replaced with a solvent used in the reaction. For example, the substitution treatment can be performed in accordance with the immersion method of the activation treatment described above by replacing the activation solvent with the solvent used in the reaction.

(Method for Introducing Long-Chain Component and Short-Chain Component)

The polysaccharide derivative according to the present disclosure can be produced by the following method.

In one example embodiment, a method for producing the polysaccharide derivative includes a step of acylating hydroxy groups of a polysaccharide by reacting a polysaccharide dispersed in a solvent with a short-chain reactant (short-chain acylating agent) and a long-chain reactant (long-chain acylating agent), in the presence of an acid scavenging component in the solvent and under a heating condition. The short-chain reactant (short-chain acylating agent) and the long-chain reactant (long-chain acylating agent) are preferably dissolved in the solvent. The acid scavenging component can also be used as the solvent.

As the long-chain reactant for introducing the long-chain component into the polysaccharide, an acid chloride of a saturated fatty acid (preferably, an acid chloride of a linear saturated fatty acid) is preferable. As the long-chain acylating agent, for example, a saturated fatty acid halide having 6 to 18 carbon atoms can be used, and the long-chain acylating agent may be used singly or in combination of two or more kinds thereof. Specific examples of the saturated fatty acid having 6 to 18 carbon atoms include caproic acid ($C_6$), enanthic acid ($C_7$), caprylic acid (Cs), pelargonic acid ($C_9$), capric acid ($C_{10}$), undecylic acid ($C_{11}$), lauric acid ($C_{12}$), tridecylic acid ($C_{13}$), myristic acid ($C_{14}$), pentadecylic acid ($C_{15}$), palmitic acid ($C_{16}$), margaric acid ($C_{17}$), and stearic acid ($C_{18}$); caproic acid, caprylic acid, and lauric acid are preferable, and caproic acid is more preferable. Furthermore, the saturated fatty acid is preferably obtained from a natural product from the viewpoint of environmental compatibility.

The short-chain acylating agent is a compound that has at least one functional group capable of reacting with a hydroxy group in cellulose or paramylon. As the short-chain acylating agent, for example, a fatty acid (acetic acid or propionic acid) halide having 2 or 3 carbon atoms can be used, and acetyl chloride or/and propionyl chloride are preferable, and acetyl chloride is more preferable.

As the solvent, a solvent having a liquid retention rate of equal to or more than 90 vol% with a cotton fiber filter paper can be used.

The "liquid retention rate" can be measured by the following method.

A cotton fiber filter paper (5B, 40 mmφ, moisture content: about 2%) is immersed in each solvent for 1 hour at room temperature. The weight before and after immersion is measured, and the liquid retention rate (vol%) is determined by applying the weight to the following equation. The weight is measured at the time point when dripping of the solvent from a sample stops after immersion.

Liquid retention rate (vol%) = (weight after immersion - weight before immersion)/weight before immersion/specific gravity of solvent × 100

Examples of the solvent that provides a liquid retention rate equal to or more than 90 vol% determined by the above-described method include water (liquid retention rate of 145 vol%), acetic acid (liquid retention rate of 109 vol%),

dioxane (liquid retention rate of 93 vol%), pyridine (liquid retention rate of 109 vol%), N-methylpyrrolidone (liquid retention rate of 104 vol%), N,N-dimethylacetamide (liquid retention rate of 112 vol%), N,N-dimethylformamide (liquid retention rate of 129 vol%), and dimethyl sulfoxide (liquid retention rate of 180 vol%).

The acid scavenging component is not particularly limited as long as it is a base that neutralizes the by-produced acid (hydrochloric acid, acetic acid, propionic acid, and/or the like), and examples of the acid scavenging component include alkali metal hydroxides such as sodium hydroxide and potassium hydroxide; alkaline earth metal hydroxides such as calcium hydroxide and barium hydroxide; metal alkoxides such as sodium methoxide and sodium ethoxide; and nitrogen-containing nucleophilic compounds such as diazabicycloundecene, diazabicyclononene, triethylamine, and pyridine. When the acid scavenging component is added separately from the solvent, the acid scavenging component is preferably present in a reaction system from the start of the reaction. The acid scavenging component may be added before or after the addition of the acylating agent as long as it is present in the reaction system at the start of the reaction.

The addition amount of the acid scavenging component is preferably 0.1 to 10 equivalents, and more preferably 0.5 to 5 equivalents with respect to the total charged amount of the long-chain acylating agent and the short-chain acylating agent. However, when the nitrogen-containing nucleophilic compound is used as a solvent, the addition amount of the acid scavenging component is not limited to this range. A small addition amount of the acid scavenger results in a decrease in the efficiency of the acylation reaction. A large addition amount of the acid scavenger may result in decomposition of the paramylon and a decrease in the molecular weight.

The reaction temperature in the acylation is preferably 50°C to 100°C, more preferably 60°C to 95°C, and still more preferably 70°C to 90°C. The reaction time can be appropriately set according to the desired degree of substitution. Since a sufficiently high reaction temperature can increase the reaction rate, the acylation reaction can be completed in a relatively short time, and the reaction efficiency can be increased. A reaction temperature within the range described above can inhibit a decrease in molecular weight due to heating.

The amount of the solvent can be set to 10 to 50 times the dry mass of the cellulose or paramylon serving as the raw material, and is preferably set to 10 to 40 times the dry mass (mass ratio).

(Recovery Step)

The polysaccharide derivative (product) into which the long-chain component and short-chain component have been introduced can be recovered from the reaction solution by a conventional method, and the method thereof is not particularly limited. From the viewpoint of manufacturing energy, when the product is not dissolved in the reaction solution, it is preferable to employ a recovery method for solid-liquid separating the product from the reaction solution. When the product is dissolved in or has affinity for the reaction solution, resulting in difficulty with solid-liquid separation, the reaction solution can be distilled off, and the product can be recovered as a residue. Alternatively, a poor solvent for the product may be added to the reaction solution to precipitate the product, which may then be recovered by solid-liquid separation.

When the reaction solution is distilled off, it is preferable that the short-chain acylating agent, the reaction solvent, and the catalyst have low boiling points, and the catalyst can also be removed from the product without distillation, for example, by using a washing solvent. When components other than the product, such as the solvent, are removed from the reaction solution, the distillation can be stopped at the time point when the product precipitates, and thereafter, the remaining reaction solution and the precipitated product can be subjected to solid-liquid separation to recover the product.

Examples of the solid-liquid separation method include filtration (natural filtration, filtration under reduced pressure, pressure filtration, centrifugal filtration, and hot filtration thereof), natural sedimentation/floating, liquid separation, centrifugation, and compression, and these may be appropriately combined.

The polysaccharide derivative (product) dissolved in a filtrate after solid-liquid separation can be precipitated by adding a poor solvent for the product, and then can be further recovered by another solid-liquid separation. The solid content (polysaccharide derivative) recovered from the reaction solution can be washed as necessary and dried by a conventional method.

The polysaccharide derivative produced by the present method can have a reinforcing crystalline structure formed by polysaccharide main-chain crystals within a thermoplastic matrix. This is derived from unreacted portions remaining when the polysaccharide raw material is acylated. Such polysaccharide main-chain crystals can be evaluated by, for example, X-ray diffraction analysis. When this evaluation is carried out, for example, signals can be made easier to detect by pressing the polysaccharide derivative to increase the density thereof.

(Another Method for Producing Polysaccharide Derivative)

In one example embodiment, a polysaccharide-based resin can be obtained by acylating a polysaccharide in a solid-liquid heterogeneous system using a mixed acid anhydride having long-chain and short-chain components as an acylating agent. The polysaccharide is preferably subjected to an activation treatment. The activation treatment can be performed by a conventional method.

The acylation can be carried out by stirring at 45°C to 65°C for 2 to 5 hours in a solvent having a liquid retention rate equal to or more than 90% as measured using cotton fiber filter paper (for example, dioxane, in an amount of, for example, 80 to 120 times the dry weight of the polysaccharide), in the presence of an acid catalyst (for example, sulfuric acid). Thereafter, it is preferable to add water and age the mixture for several hours (for example, 1 to 3 hours) under heating (for example, 55°C to 75°C).

After completion of the reaction, a poor solvent such as a mixed solvent of water and methanol is added to sufficiently precipitate the product dissolved in a liquid phase, and solid-liquid separation is performed to recover the product. Thereafter, washing and drying can be performed.

The acylation may be performed in a homogeneous dissolution system in which the polysaccharide and the acylating agent are dissolved in the solvent. The polysaccharide is preferably subjected to an activation treatment. The activation treatment can be performed by a conventional method.

As the solvent for the acylation, a solvent having high affinity for the polysaccharide, such as N,N-dimethylacetamide, pyridine, or N-methylpyrrolidone, is used.

As the acylating agent, a mixed acid anhydride having a long-chain component and a short-chain component is formed in the same solvent as the solvent used for acylation, and this can be used.

After completion of the reaction, a poor solvent such as methanol is added to precipitate a product, and solid-liquid separation is performed to recover the product. Thereafter, washing and drying can be performed.

[Biodegradable Resin]

Examples of the biodegradable resin include polybutylene succinate (PBS), polybutylene succinate adipate (PBSA), and polycaprolactone (PCL). The biodegradable resin may be used singly or in combination of two or more kinds thereof. By using these specific biodegradable resins, the polysaccharide-based biomass plastic having favorable mechanical strength and thermoplasticity can be obtained.

<Method for Producing Polysaccharide-Based Biomass Plastic>

A method for producing the polysaccharide-based biomass plastic according to the present disclosure is not particularly limited, and can be carried out by, for example, melt-mixing a polysaccharide derivative and a biodegradable resin by hand mixing or using a known mixing device, such as a tumbler mixer, ribbon blender, single- or multi-screw extruder, kneading kneader, or kneading roll, and then optionally granulating the resulting mixture into an appropriate shape. As another preferable production method, there is a production method of mixing a polysaccharide derivative and a biodegradable resin, which have been dispersed in a solvent such as an organic solvent, optionally adding a coagulating solvent to obtain a mixed composition of the polysaccharide derivative and the biodegradable resin, and subsequently evaporating the solvent.

<Molding Resin Composition>

The polysaccharide-based biomass plastic of the present disclosure can be used as a base resin of a molding resin composition. The molding resin composition can contain other components depending on the desired characteristics as long as the function of the base resin is not impaired. The polysaccharide-based biomass plastic is equal to or more than 60 mass%, preferably equal to or more than 70 mass%, more preferably equal to or more than 80 mass%, and particularly preferably equal to or more than 90 mass% in the molding resin composition.

Various additives used for conventional thermoplastic resins can be applied to the molding resin composition of the present disclosure. For example, it is possible to further improve thermoplasticity and elongation at break by adding a plasticizer. Examples of such plasticizers include phthalic acid esters such as dibutyl phthalate, diaryl phthalate, diethyl phthalate, dimethyl phthalate, di-2-methoxyethyl phthalate, ethylphthalylethyl glycolate, and methylphthalylethyl glycolate; tartaric acid esters such as dibutyl tartrate; adipic acid esters such as dioctyl adipate and diisononyl adipate; polyhydric alcohol esters such as triacetin, diacetyl glycerin, tripropionitrile glycerin, and glycerin monostearate; phosphoric acid esters such as triethyl phosphate, triphenyl phosphate, and tricresyl phosphate; dibasic fatty acid esters such as dibutyl adipate, dioctyl adipate, dibutyl azelate, dioctyl azelate, and dioctyl sebacate; citric acid esters such as triethyl citrate, acetyl triethyl citrate, and acetyl tributyl citrate; epoxidized vegetable oils such as epoxidized soybean oil and epoxidized linseed oil; castor oil and derivatives thereof; benzoic acid esters such as ethyl o-benzoylbenzoate; aliphatic dicarboxylic acid esters such as sebacic acid esters and azelaic acid esters; unsaturated dicarboxylic acid esters such as maleic acid esters; N-ethyl toluenesulfonamide, triacetin, o-cresyl p-toluenesulfonate, tripropionin; cyclohexanedicarboxylic acid esters such as dihexyl cyclohexanedicarboxylate, dioctyl cyclohexanedicarboxylate, and di(2-methyloctyl) cyclohexanedicarboxylate; trimellitic acid esters such as dihexyl trimellitate, diethylhexyl trimellitate, and dioctyl trimellitate; and pyromellitic acid esters such as dihexyl pyromellitate, diethylhexyl pyromellitate, and dioctyl pyromellitate. These

plasticizers can be used singly or in combination of two or more kinds thereof.

An inorganic or organic granular or fibrous filler can be added to the molding resin composition of the present disclosure as necessary. Addition of the filler can further improve the strength and rigidity. Examples of the filler include mineral matter particles (such as talc, mica, calcined siliceous earth, kaolin, sericite, bentonite, smectite, clay, silica, quartz powder, glass beads, glass powder, glass flakes, milled fibers, and wollastonite), boron-containing compounds (such as boron nitride, boron carbide, and titanium boride), metal carbonates (such as magnesium carbonate, heavy calcium carbonate, and light calcium carbonate), metal silicates (such as calcium silicate, aluminum silicate, magnesium silicate, and magnesium aluminosilicate), metal oxides (such as magnesium oxide), metal hydroxides (such as aluminum hydroxide, calcium hydroxide, and magnesium hydroxide), metal sulfates (such as calcium sulfate and barium sulfate), metal carbides (such as silicon carbide, aluminum carbide, and titanium carbide), metal nitrides (such as aluminum nitride, silicon nitride, and titanium nitride), white carbon, and various metal foils. Examples of the fibrous filler include organic fibers (such as natural fibers and paper), inorganic fibers (such as glass fibers, asbestos fibers, carbon fibers, silica fibers, silica alumina fibers, wollastonite, zirconia fibers, and potassium titanate fibers), and metal fibers. These fillers can be used singly or in combination of two or more kinds thereof.

Glass fibers can be added to the molding resin composition of the present disclosure as necessary. Inclusion of the glass fiber in the resin composition improves the strength of the molded body. The glass fiber is not particularly limited, but the fiber length of the glass fiber is preferably equal to or more than 0.5 mm, and preferably equal to or less than 30 mm and more preferably equal to or less than 10 mm in the shape before melt-kneading. The cross-sectional shape of the glass fiber is not particularly limited, and examples thereof include a circular shape, an elliptical shape, an oval shape, and a non-circular shape. The fiber diameter of the glass fiber may be, for example, 3 to 20 $\mu$m when the cross-sectional area is converted into a perfect circle.

A flame retardant can be added to the molding resin composition of the present disclosure as necessary. The flame retardancy can be imparted by adding the flame retardant. Examples of the flame retardant include metal hydrates such as magnesium hydroxide, aluminum hydroxide, and hydrotalcite; basic magnesium carbonate; calcium carbonate; silica; alumina; talc; clay; zeolite; brominated flame retardants; antimony trioxide; phosphorus-based flame retardants (such as aromatic phosphate esters and aromatic condensed phosphate esters); and phosphorus-nitrogen-containing compounds (phosphazene compounds). These flame retardants can be used singly or in combination of two or more kinds thereof.

A hydrolysis inhibitor can be added to the molding resin composition of the present disclosure as necessary. The hydrolysis inhibitors may be used singly or in combination of two or more kinds thereof. Examples of the hydrolysis inhibitor include compounds having functional groups such as a carbodiimide group, an epoxy group, and an oxazoline group.

The carbodiimide compound is a compound having one or more carbodiimide groups (-N=C=N-) in the molecule. The carbodiimide compound may be a compound containing two or more carbodiimide groups in the molecule, that is, a polyvalent carbodiimide compound. In one aspect, the number of carbodiimide groups in the polyvalent carbodiimide compound is preferably equal to or less than 30 in the carbodiimide compound. As the carbodiimide compound, a high molecular weight polycarbodiimide produced by a decarboxylative condensation reaction of diisocyanate in the presence of a carbodiimide catalyst may be used.

Examples of the carbodiimide compound include monocarbodiimides such as aliphatic monocarbodiimide, alicyclic monocarbodiimide, and aromatic monocarbodiimide, and polycarbodiimides such as aliphatic polycarbodiimide, alicyclic polycarbodiimide, and aromatic polycarbodiimide. Examples of the aliphatic monocarbodiimide include diisopropylcarbodiimide, dimethylcarbodiimide, diisobutylcarbodiimide, and dioctylcarbodiimide. Examples of the alicyclic monocarbodiimide include dicyclohexylcarbodiimide. Examples of the aromatic monocarbodiimide include N,N'-diphenylcarbodiimide and N,N'-di-2,6-diisopropylphenylcarbodiimide. Examples of the polycarbodiimide include those obtained by decarboxylative condensation reaction of the following diisocyanates. Examples of the diisocyanates include 1,4-phenylene diisocyanate, 1,3,5-triisopropyl-phenylene-2,4-diisocyanate, 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenylether diisocyanate, 3,3'-dimethyl-4,4'-diphenylether diisocyanate, 2,4-tolylene diisocyanate, 2,6-tolylene diisocyanate, 1-methoxyphenyl-2,4-diisocyanate, isophorone diisocyanate, 4,4'-dicyclohexylmethane diisocyanate, and tetramethylxylylene diisocyanate. The number-average molecular weight of the polycarbodiimide is not particularly limited, but for example, it is preferable to use a polycarbodiimide having a number-average molecular weight of preferably equal to or more than 200, more preferably equal to or more than 300, and preferably equal to or less than 20,000.

The carbodiimide compound may be a carbodiimide compound having an isocyanate group in the molecule or a carbodiimide compound having no isocyanate group in the molecule, and can be appropriately selected. In the polycarbodiimide, both ends of the molecule or any moiety in the molecule may have a functional group such as an isocyanate group, or may have a molecular structure different from other portions such as a branched molecular chain. In addition, the carbodiimide compound may have a heterocyclic ring or another functional group in the molecule.

Examples of an epoxy group-containing compound include a glycidyl ester compound and a glycidyl ether compound. Examples of a compound containing an oxazoline group include bisoxazoline compounds.

The molding resin composition according to the present disclosure can further contain additives such as phenol-based or phosphorus-based antioxidants, light stabilizers, ultraviolet absorbers, antistatic agents, and antibacterial or antifungal agents.

<Molded body>

A molded body of the present disclosure is prepared by molding the molding resin composition. Examples of the molding method include extrusion molding, injection molding, and blow molding.

The applications of the molded body of the present disclosure are not particularly limited, but the molded body is suitably used, for example, for fishing gear and fishing nets, housings and exterior parts of electronic devices and home appliances, interior components of building materials, and interior materials of automobiles. Examples of the electronic device and home electric appliance applications include housings of personal computers, fixed phones, mobile phone terminals, smartphones, tablets, POS terminals, routers, projectors, speakers, lighting fixtures, copiers, multifunction printers, calculators, remote controllers, refrigerators, washing machines, humidifiers, dehumidifiers, video recorders and players, vacuum cleaners, air conditioners, rice cookers, electric shavers, electric toothbrushes, dishwashers, broadcasting devices, and the like, dial plates and exteriors of watches, and cases of portable terminals such as smartphones. Examples of the automobile applications include interior instrument panels, dashboards, cup holders, door trims, armrests, door handles, door locks, handles, brake levers, ventilators, and shift levers.

Examples

The present disclosure will be described in more detail below with reference to specific examples, but the present disclosure is not limited to these.

[1] Marine Biodegradability Test

(1) Samples

As the charged amount of each biomass plastic sample, a value calculated based on the oxygen demand was used. In a case of an alloyed product with a biodegradable resin, a molded body was used after being pulverized with a stand mixer. The charged amount of each sample was determined in such a way that the oxygen consumption when the sample was completely oxidized, that is, a theoretical oxygen demand (ThOD) was 20 mg/bottle. The theoretical oxygen demand of a compound (CcHhClclNnSsPpNanaOo) was calculated by the following equation. As a standard sample, the chopped cellulose filter paper, Whatman No. 42, was used.

[Mathematical formula 1]

$$\mathrm{ThOD} = \frac{16(2c+0.5(h-cl-3n)+3s+2.5p+0.5na-o)}{Mr}$$

**ThOD: Theorical Oxygen Demand (mg $O_2$/mg Sample)**

**Mr: Relative molecular weight (g/mol)**

*** For cellulose, about 16 mg/botle**

(2) Collection of Environmental Water and Adjustment Thereof

As environmental water, sea water from Odaiba was used. The data for ambient temperature, water temperature, pH, and the like are illustrated in Table 1 (Tests 1 to 3 were conducted under Condition 2; Tests 4 and 5 under were conducted under Condition 1; and Tests 10, 11, 14, 23, 26 to 29, 31, and 32 were conducted under Condition 3). The environmental water was collected in a container that had been sterilized with ethanol in advance. At the time of collection, not only water but also soil was collected together. Thereafter, the soil was added in an amount of 2 kg per 10 L of the environmental water, and the environmental water and the soil were thoroughly mixed. While the mixture was stirred, impurities were removed using a 122 μm nylon mesh, and a pre-incubation was then performed for 7 days to adjust environmental water and a soil for a biodegradability test.

[Table 1]

| | Environmental water | Collection date | Number of colonies | Weather | Water Temperature | Air Temperature | pH |
|---|---|---|---|---|---|---|---|
| **Condittion 1** | **Odaiba Seaside Park** | **September 8, 2022** | **$4.8x10^5$ CFU/mL** | **Cloudy** | **27°C** | **25°C** | **7.2** |
| **Condittion 2** | **Odaiba Seaside Park** | **January 6, 2023** | **$2.0\times10^4$ CFU/mL** | **Cloudy** | **12°C** | **7°C** | **7.5** |
| **Condittion 3** | **Odaiba Seaside Park** | **July 13, 2023** | **$1.2\times10^5$ CFU/mL** | **Cloudy** | **28°C** | **29.3°0** | **8.0** |

(3) BOD Measurement

Into a 300 mL culture bottle (transparent glass bottle), 100 mL of the environmental water adjusted for the biodegradability test as described above, 10 g of the soil, and 100 μL of a buffer were added, and the sample was then added thereto. The culture bottle was incubated in a thermostatic chamber at 25°C, and BOD measurement was performed for three months using the OxiTop IDS (WTW GmbH). The composition of the buffer was 0.5 g/L of NH4Cl and 0.1 g/L of $KH_2PO_4$, and 5 mg/L of allylthiourea was further added.

The principle of a BOD testing apparatus will be described below. During the measurement, oxygen is consumed by microorganisms in water, and carbon dioxide is released. When the released carbon dioxide is absorbed by an absorbent (NaOH), the pressure inside the bottle decreases. This pressure change is detected by a pressure sensor, and the BOD value is calculated.

$$\text{BOD biodegradation value (\%)} = (\text{BODs} - \text{BODb})/\text{ThOD} \times 100... \quad \text{(i)}$$

BODs: BOD measurement value of test piece (mg)
BODb: BOD measurement value of blank (mg)
ThOD: Theoretical oxygen consumption (mL)

The marine biodegradability of each biomass plastic was evaluated with a degradation value relative to that of the cellulose (standard sample). The BOD biodegradation value (%) was calculated using Equation (i), and the value was divided by a degradation value of cellulose evaluated under the same conditions to obtain a BOD biodegradation value of each biomass plastic relative to that of the cellulose. The number of samples was n = 3, and the average value was adopted.

[2] Mechanical Properties

(1) Preparation of Molded Body

In Examples and Comparative Examples, molded bodies were used for the physical property evaluation of derivatives. Molding was carried out under conditions in which the cylinder temperature was set to 190°C to 230°C, the mold temperature was set to 65°C, and the holding pressure was set to 100 MPa. HAAKE MiniJet II manufactured by Thermo Electron Corporation was used as a molding machine.

(2) Evaluation of Physical Properties

The molded bodies were subjected to the following evaluations.

<Charpy Impact Test>

A Charpy impact test was performed according to JIS K7111-1 (with notches: type A (notch cutter tip R0.25mm)) using an evaluation sample having a test piece 1A shape specified in JIS K 7162.

<Flexural Strength, Flexural Modulus, and Strain at Break>

A flexural test was conducted in accordance with JIS K7171, and the flexural strength, flexural modulus, and flexural strain at break were measured.

<Thermoplasticity (MFR)>

MFR was measured using an up-and-down flow tester (product name: CFT-500D, manufactured by Shimadzu Corporation) in accordance with JIS 7210:1990, under the conditions including a temperature of 210°C, a load of 5 kg, a die size of 2 mm in a diameter × 10 mm in length, and a preheating time of 2 minutes (defined as the time from when the sample is charged into a cylinder and a piston is inserted, to when the load is applied).

<Glass Transition Temperature (Tg)>

The glass transition point was determined by performing differential scanning calorimetry (DSC) under the following conditions. As a measuring apparatus, EXSTAR2000 and DSC6200 manufactured by Seiko Instruments Inc. were used. The derivative was heated from 20°C to 200°C at 10°C/min, and then rapidly cooled from 200°C to -30°C at 50°C/min. Then, the glass transition point (Tg) of the derivative was measured when the temperature was raised from -30°C to 200°C at 20°C/min.

<Molecular Weight of Polysaccharide>

(Degree of Polymerization of Cellulose)

The degree of polymerization of the cellulose (prior to the introduction of long-chain and short-chain components) was determined by measuring the intrinsic viscosity [η] in accordance with JIS P8215, and calculating the value using the following equation. In the equation, "DP" represents "polymerization degree".

$$[\eta] = 1.67 \times DP^{0.71}$$

(GPC Measurement Conditions of Paramylon)

The weight-average molecular weight of paramylon was measured under the following conditions.

Column: PLgel 20 μm MIXED-A(product name, manufactured by Agilent Technologies, Inc.)
Eluent: Dimethylacetamide (DMAc) solution (0.1M LiCl)
Flow rate: 0.5 mL/min
Detector: RI (differential refractive index) (RI-71-type 201 (16X) manufactured by Tosoh Corporation)
Temperature: 23.0°C
Standard sample: Pullulan standard

(Synthesis Example 1) Synthesis of Paramylon Derivative P1

(1) 50 g (weight-average molecular weight (Mw): 432,000) of paramylon was added and dispersed to a mixed solvent of 421 mL of N-methylpyrrolidone and 79 mL of pyridine, and the resulting mixture was stirred at room temperature overnight under a nitrogen atmosphere.
(2) The dispersion obtained in (1) was cooled to -4°C, and thereafter, a mixture of 54.0 g of hexanoyl chloride and 31.5 g of acetyl chloride prepared in advance was added to the dispersion obtained in (1) while maintaining the temperature at 10°C or lower, and the temperature of the mixture was heated to 90°C and then stirred for 4 hours while being heated.
(3) Thereafter, the reaction solution was cooled to 65°C, 250 mL of methanol was added dropwise, the mixture was stirred for about 30 minutes, and 300 mL of water was further added to precipitate a product. The product was recovered by suction filtration, washed five times with 450 mL of a mixture of methanol and water (5/1 v/v), and vacuum-dried at 105°C for 5 hours to obtain paramylon acetate hexanoate (yield: 91 g ( yield rate: 97%)). The obtained

paramylon acetate hexanoate (paramylon derivative P1) had a DSHe (degree of substitution with long-chain components) of 1.04 and a DSAc (degree of substitution with short-chain components) of 0.99.

(Synthesis Example 2) Synthesis of Paramylon Derivative P2

A paramylon derivative P2 was obtained in the same manner as in Synthesis Example 1 except that 49.8 g of hexanoyl chloride and 33.9 g of acetyl chloride were used (yield: 91 g (yield rate: 94%)). The obtained paramylon acetate hexanoate (paramylon derivative P2) had a DSHe (degree of substitution with long-chain components) of 1.20 and a DSAc (degree of substitution with short-chain components) of 0.93.

(Synthesis Example 3) Synthesis of Paramylon Derivative P3

A paramylon derivative P3 was obtained in the same manner as in Synthesis Example 1 except that 57.3 g of hexanoyl chloride and 33.4 g of acetyl chloride were used (yield: 93 g (yield rate: 97%)). The obtained paramylon acetate hexanoate (paramylon derivative P3) had a DSHe (degree of substitution with long-chain components) of 1.23 and a DSAc (degree of substitution with short-chain components) of 0.97.

(Synthesis Example 4) Synthesis of Paramylon Derivative P4

(1) 500 g of paramylon (weight-average molecular weight (Mw): 461,000) and 5.0 kg of a 7% aqueous hydrochloric acid solution were charged into a reactor, and after stirring at 90°C for 4 hours, the temperature of a reaction solution was returned to room temperature. The product was collected by suction filtration, washed 5 times with 5.0 kg of water, and then the washed solid content was vacuum-dried at 105°C for 5 hours to obtain a paramylon 1 (yield: 309 g (yield rate: 62%)). The weight-average molecular weight (Mw) of the paramylon 1 was 148,000.

The addition and dispersion of 50 g of the paramylon 1 to a mixed solvent of 421 mL of N-methylpyrrolidone and 79 mL of pyridine were performed, and the resulting mixture was stirred at room temperature overnight under a nitrogen atmosphere.

(2) The dispersion obtained in (1) was cooled to -4°C, and thereafter, a mixture of 57.3 g of hexanoyl chloride and 33.4 g of acetyl chloride prepared in advance was added to the dispersion obtained in (1) while maintaining the temperature at 10°C or lower, and the mixture was heated to 90°C and then stirred for 4 hours while being heated.

(3) Thereafter, the reaction solution was cooled to 65°C, and 210 mL of water was added to precipitate a product. The product was recovered by suction filtration, washed five times with 450 mL of a mixture of methanol and water (5/1 v/v), and vacuum-dried at 105°C for 5 hours to obtain paramylon acetate hexanoate (yield: 100 g ( yield rate: 100%)). The obtained paramylon acetate hexanoate (paramylon derivative P4) had a DSHe (degree of substitution with long-chain components) of 1.21 and a DSAc (degree of substitution with short-chain components) of 1.07.

(Synthesis Example 5) Synthesis of Paramylon Derivative P5

A paramylon derivative P5 was obtained in the same manner as in Synthesis Example 1 except that 33.2 g of hexanoyl chloride and 38.7 g of acetyl chloride were used (yield: 80 g (yield rate: 97%)). The obtained paramylon acetate hexanoate (paramylon derivative P5) had a DSHe (degree of substitution with long-chain components) of 0.59 and a DSAc (degree of substitution with short-chain components) of 1.07.

(Synthesis Example 6) Synthesis of Paramylon Derivative P6

A paramylon derivative P6 was obtained in the same manner as in Synthesis Example 2 except that 57.3 g of hexanoyl chloride and 36.3 g of acetyl chloride were used (yield: 101 g (yield rate: 96%)). The obtained paramylon acetate hexanoate (paramylon derivative P6) had a DSHe (degree of substitution with long-chain components) of 1.31 and a DSAc (degree of substitution with short-chain components) of 1.17.

(Synthesis Example 10) Synthesis of Paramylon Derivative P7

A paramylon derivative P7 was obtained in the same manner as in Synthesis Example 1 except that 37.4 g of hexanoyl chloride and 43.6 g of acetyl chloride were used (yield: 89.0 g (yield rate: 96%)). The obtained paramylon acetate

hexanoate (paramylon derivative P7) had a DSHe (degree of substitution with long-chain components) of 0.80 and a DSAc (degree of substitution with short-chain components) of 1.42.

(Synthesis Example 11) Synthesis of Paramylon Derivative P8

A paramylon derivative P8 was obtained in the same manner as in Synthesis Example 1 except that 66.4 g of hexanoyl chloride and 19.4 g of acetyl chloride were used (yield: 74.0 g (yield rate: 76%)). The obtained paramylon acetate hexanoate (paramylon derivative P8) had a DSHe (degree of substitution with long-chain components) of 1.33 and a DSAc (degree of substitution with short-chain components) of 0.60.

(Synthesis Example 12) Synthesis of Paramylon Derivative P9

A paramylon derivative P8 was obtained in the same manner as in Synthesis Example 1 except that 33.2 g of hexanoyl chloride and 43.6 g of acetyl chloride were used (yield: 84.2 g (yield rate: 96%)). The obtained paramylon acetate hexanoate (paramylon derivative P8) had a DSHe (degree of substitution with long-chain components) of 0.72 and a DSAc (degree of substitution with short-chain components) of 1.23.

(Synthesis Example 7) Synthesis of Cellulose Derivative C1

(1) 100 g of cellulose (polymerization degree: 560) was added to and dispersed in a mixed solvent of 1.14 L of N-methylpyrrolidone and 159 mL of pyridine, and the mixture was stirred at room temperature overnight under a nitrogen atmosphere to obtain a dispersion.
(2) The dispersion obtained in (1) was cooled to -4°C, and thereafter, a mixture of 166 g of hexanoyl chloride and 48.4 g of acetyl chloride prepared in advance was added to the dispersion obtained in (1) while maintaining the temperature at 10°C or lower, and the mixture was heated to 90°C and then stirred for 4 hours while being heated.
(3) Thereafter, the reaction solution was cooled to 65°C, 750 mL of methanol was added dropwise, the mixture was stirred for about 30 minutes, and 333 mL of water was then further added to precipitate a product. A product was collected by suction filtration, washed 5 times with 1.30 L of methanol, and then vacuum-dried at 105°C for 5 hours to obtain a cellulose-based resin (yield: 203 g (yield rate: 92%)). The obtained cellulose acetate hexanoate (cellulose derivative C1) had a DSHe (degree of substitution with long-chain components) of 1.64 and a DSAc (degree of substitution with short-chain components) of 0.87.

(Synthesis Example 8) Synthesis of Cellulose Derivative C2

A cellulose derivative C2 was obtained in the same manner as in Synthesis Example 7 except that 125 g of hexanoyl chloride and 72.6 g of acetyl chloride were used (yield: 186 g (yield rate: 90%)). The obtained cellulose acetate hexanoate (cellulose derivative C2) had a DSHe (degree of substitution with long-chain components) of 1.20 and a DSAc (degree of substitution with short-chain components) of 1.33.

(Synthesis Example 9) Synthesis of Cellulose Derivative C3

A cellulose derivative C3 was obtained in the same manner as in Synthesis Example 7 except that 41.5 g of hexanoyl chloride and 145 g of acetyl chloride were used (yield: 178 g (yield rate : 94%)). The obtained cellulose acetate hexanoate (cellulose derivative C3) had a DSHe (degree of substitution with long-chain components) of 0.31 and a DSAc (degree of substitution with short-chain components) of 2.73.
Tables 2 and 3 indicate the degrees of substitution ($DS_{Lo}$·$DS_{sh}$) of the long-chain component (hexanoyl group) and the short-chain component (acetyl group) of the polysaccharide derivative obtained in Synthesis Examples 1 to 9.

[Table 2]

| Paramylon derivative | | P1 | P2 | P3 | P4 | P5 | P6 | P7 | P8 | P9 |
|---|---|---|---|---|---|---|---|---|---|---|
| | **Long-chain substitution degree ($DS_{Lo}$)** | **1.04** | **1.20** | **1.23** | **1.21** | **0.59** | **1.31** | **0.80** | **1.33** | **0.72** |

(continued)

| Paramylon derivative | | P1 | P2 | P3 | P4 | P5 | P6 | P7 | P8 | P9 |
|---|---|---|---|---|---|---|---|---|---|---|
| Substitution degree | Short-chain substitution degree ($DS_{Sh}$) | 0.99 | 0.93 | 0.97 | 1.07 | 1.07 | 1.17 | 1.42 | 0.60 | 1.23 |
| | Total DS | 2.03 | 2.13 | 2.20 | 2.28 | 1.66 | 2.48 | 2.22 | 1.93 | 1.95 |

[Table 3]

| Cellulose derivative | | C1 | C2 | C3 |
|---|---|---|---|---|
| Substitution degree | Long-chain substitution degree ($DS_{Lo}$) | 1.64 | 1.20 | 0.31 |
| | Short-chain substitution degree ($DS_{Sh}$) | 0.87 | 1.33 | 2.73 |
| | Total DS | 2.51 | 2.53 | 3.04 |

(Test Example 1)

Production of Biomass Plastic Containing Paramylon Derivative P1 and Polybutylene Succinate Adipate (PBSA) At Ratio of 80 : 20

After 24.0 g of the paramylon derivative P1 (pellets) and 6.0 g of PBSA (pellets) were placed in a bag and premixed, the mixture was melt-kneaded at 200°C using a twin-screw kneader (a small-scale kneader, which is used in all of Examples and Comparative Examples described below) to produce pellets. The obtained pellets were molded by an injection molding machine, and physical properties were evaluated.

(Test Example 2)

Production of Biomass Plastic Containing Paramylon Derivative P1 and Polybutylene Succinate Adipate (PBSA) At Ratio of 90 : 10

After 27.0 g of the paramylon derivative P1 (pellets) and 3.0 g of PBSA (pellets) were placed in a bag and premixed, the mixture was mixed at 200°C using a twin-screw kneader to produce pellets. The obtained pellets were molded by an injection molding machine, and physical properties were evaluated.

(Test Example 3)

Production of Biomass Plastic Containing Paramylon Derivative P1

By using a twin-screw kneader, 30.0 g of the paramylon derivative P1 was mixed at 200°C to produce pellets. The obtained pellets were molded by an injection molding machine, and physical properties were evaluated.

(Test Example 4)

Production of Biomass Plastic Containing Paramylon Derivative P4

By using a twin-screw kneader, 30.0 g of the paramylon derivative P4 was mixed at 200°C to produce pellets. The obtained pellets were molded by an injection molding machine, and physical properties were evaluated.

(Test Example 5)

Production of Biomass Plastic Containing Paramylon Derivative P6

By using a twin-screw kneader, 30.0 g of the paramylon derivative P6 was mixed at 200°C to produce pellets. The obtained pellets were molded by an injection molding machine, and physical properties were evaluated.

(Test Example 6)

Production of Biomass Plastic Containing Paramylon Derivative P2 and Polybutylene Succinate Adipate (PBSA) At Ratio of 80 : 20

After 24.0 g of the paramylon derivative P2 (pellets) and 6.0 g of PBSA (pellets) were placed in a bag and premixed, the mixture was mixed at 200°C using a twin-screw kneader to produce pellets. The obtained pellets were molded by an injection molding machine, and physical properties were evaluated.

(Test Example 7)

Production of Biomass Plastic Containing Paramylon Derivative P2

By using a twin-screw kneader, 30.0 g of the paramylon derivative P2 was mixed at 200°C to produce pellets. The obtained pellets were molded by an injection molding machine, and physical properties were evaluated.

(Test Example 8)

Production of Biomass Plastic Containing Paramylon Derivative P3 and Polybutylene Succinate Adipate (PBSA) At Ratio of 83 : 17

After 24.9 g of the paramylon derivative P3 (pellets) and 5.1 g of PBSA (pellets) were placed in a bag and premixed, the mixture was mixed at 200°C using a twin-screw kneader to produce pellets. The obtained pellets were molded by an injection molding machine, and physical properties were evaluated.

(Test Example 9)

Production of Biomass Plastic Containing Paramylon Derivative P3 and Polybutylene Succinate Adipate (PBSA) At Ratio of 86 : 14

After 25.8 g of the paramylon derivative P3 (pellets) and 4.2 g of PBSA (pellets) were placed in a bag and premixed, the mixture was mixed at 200°C using a twin-screw kneader to produce pellets. The obtained pellets were molded by an injection molding machine, and physical properties were evaluated.

(Test Example 10)

Production of Biomass Plastic Containing Paramylon Derivative P3 and Polybutylene Succinate Adipate (PBSA) At Ratio of 90 : 10

After 27.0 g of the paramylon derivative P3 (pellets) and 3.0 g of PBSA (pellets) were placed in a bag and premixed, the mixture was mixed at 200°C using a twin-screw kneader to produce pellets. The obtained pellets were molded by an injection molding machine, and physical properties were evaluated.

(Test Example 11)

Production of Biomass Plastic Containing Paramylon Derivative P3

By using a twin-screw kneader, 30.0 g of the paramylon derivative P3 was mixed at 200°C to produce pellets. The obtained pellets were molded by an injection molding machine, and physical properties were evaluated.

(Test Example 12)

Production of Biomass Plastic Containing Paramylon Derivative P5 and Polybutylene Succinate Adipate (PBSA) At Ratio of 70 : 30

After 21.0 g of the paramylon derivative P3 (pellets) and 9.0 g of PBSA (pellets) were placed in a bag and premixed, the mixture was mixed at 225°C using a twin-screw kneader to produce pellets. The obtained pellets were molded by an injection molding machine, and physical properties were evaluated.

(Test Example 13)

Production of Biomass Plastic Containing Paramylon Derivative P5 and Polybutylene Succinate Adipate (PBSA) At Ratio of 80 : 20

After 24.0 g of the paramylon derivative P5 (pellets) and 6.0 g of PBSA (pellets) were placed in a bag and premixed, the mixture was mixed at 225°C using a twin-screw kneader to produce pellets. The obtained pellets were molded by an injection molding machine, and physical properties were evaluated.

(Test Example 14)

Production of Biomass Plastic Containing Paramylon Derivative P5

By using a twin-screw kneader, 30.0 g of the paramylon derivative P5 was mixed at 225°C to produce pellets. The obtained pellets were molded by an injection molding machine, and physical properties were evaluated.

(Test Example 15)

Production of Biomass Plastic Containing Cellulose Derivative C1 and Polybutylene Succinate Adipate (PBSA) At Ratio of 80 : 20

After 24.0 g of the Cellulose derivative C1 (pellets) and 6.0 g of PBSA (pellets) were placed in a bag and premixed, the mixture was mixed at 220°C using a twin-screw kneader to produce pellets. The obtained pellets were molded by an injection molding machine, and physical properties were evaluated.

(Test Example 16)

Production of Biomass Plastic Containing Cellulose Derivative C1

By using a twin-screw kneader, 30.0 g of the cellulose derivative C1 was mixed at 220°C to produce pellets. The obtained pellets were molded by an injection molding machine, and physical properties were evaluated.

(Test Example 17)

Production of Biomass Plastic Containing Cellulose Derivative C2 and Polybutylene Succinate Adipate (PBSA) At Ratio of 80 : 20

After 24.0 g of the Cellulose derivative C2 (pellets) and 6.0 g of PBSA (pellets) were placed in a bag and premixed, the mixture was mixed at 220°C using a twin-screw kneader to produce pellets. The obtained pellets were molded by an injection molding machine, and physical properties were evaluated.

(Test Example 18)

Production of Biomass Plastic Containing Cellulose Derivative C2

By using a twin-screw kneader, 30.0 g of the cellulose derivative C2 was mixed at 220°C to produce pellets. The obtained pellets were molded by an injection molding machine, and physical properties were evaluated.

(Test Example 19)

Production of Biomass Plastic Containing Cellulose Derivative C3 and Polybutylene Succinate Adipate (PBSA) At Ratio of 80 : 20

After 24.0 g of the Cellulose derivative C3 (pellets) and 6.0 g of PBSA (pellets) were placed in a bag and premixed, the mixture was mixed at 230°C using a twin-screw kneader to produce pellets. The obtained pellets were molded by an injection molding machine, and physical properties were evaluated.

(Test Example 20)

Production of Cellulose Derivative C3

By using a twin-screw kneader, 30.0 g of the cellulose derivative C3 was mixed at 230°C to produce pellets. The obtained pellets were molded by an injection molding machine, and physical properties were evaluated.

(Test Example 21)

Production of Biomass Plastic Containing Paramylon Derivative P2 and Polycaprolactone (PCL) At Ratio of 90 : 10

After 27.0 g of the paramylon derivative P2 (pellets) and 3.0 g of PCL (pellets) were placed in a bag and premixed, the mixture was mixed at 200°C using a twin-screw kneader to produce pellets. The obtained pellets were molded by an injection molding machine, and physical properties were evaluated.

(Test Example 22)

Production of Biomass Plastic Containing Paramylon Derivative P2 and Polycaprolactone (PCL) At Ratio of 95 : 5

After 28.5 g of the paramylon derivative P2 (pellets) and 1.5 g of PCL (pellets) were placed in a bag and premixed, the mixture was mixed at 200°C using a twin-screw kneader to produce pellets. The obtained pellets were molded by an injection molding machine, and physical properties were evaluated.

(Test Example 23)

Production of Biomass Plastic Containing Paramylon Derivative P3 and Polycaprolactone (PCL) At Ratio of 80 : 20

After 24.0 g of the paramylon derivative P3 (pellets) and 6.0 g of PCL (pellets) were placed in a bag and premixed, the mixture was mixed at 200°C using a twin-screw kneader to produce pellets. The obtained pellets were molded by an injection molding machine, and physical properties were evaluated.

(Test Example 24)

Production of Biomass Plastic Containing Paramylon Derivative P3 and Polybutylene Adipate Terephthalate (PBAT) At Ratio of 80 : 20

After 24.0 g of the paramylon derivative P3 (pellets) and 6.0 g of PBAT (pellets) were placed in a bag and premixed, the mixture was mixed at 200°C using a twin-screw kneader to produce pellets. The obtained pellets were molded by an injection molding machine, and physical properties were evaluated.

(Test Example 25)

Production of Biomass Plastic Containing Paramylon Derivative P3 and Polylactic Acid (PLA) At Ratio of 80 : 20

After 24.0 g of the paramylon derivative P3 (pellets) and 6.0 g of PLA (pellets) were placed in a bag and premixed, the mixture was mixed at 200°C using a twin-screw kneader to produce pellets. The obtained pellets were molded by an injection molding machine, and physical properties were evaluated.

(Test Example 26)

Production of Biomass Plastic Containing Paramylon Derivative P7

By using a twin-screw kneader, 30.0 g of the paramylon derivative P7 was mixed at 225°C to produce pellets. The obtained pellets were molded by an injection molding machine, and physical properties were evaluated.

(Test Example 27)

Production of Biomass Plastic Containing Paramylon Derivative P7 and Polycaprolactone (PCL) At Ratio of 90 : 10

After 27.0 g of the paramylon derivative P7 (pellets) and 3.0 g of PCL (pellets) were placed in a bag and premixed,

the mixture was mixed at 200°C using a twin-screw kneader to produce pellets. The obtained pellets were molded by an injection molding machine, and physical properties were evaluated.

(Test Example 28)

Production of Biomass Plastic Containing Paramylon Derivative P8

By using a twin-screw kneader, 30.0 g of the paramylon derivative P8 was mixed at 225°C to produce pellets. The obtained pellets were molded by an injection molding machine, and physical properties were evaluated.

(Test Example 29)

Production of Biomass Plastic Containing Paramylon Derivative P8 and Polycaprolactone (PCL) At Ratio of 90 : 10

After 27.0 g of the paramylon derivative P8 (pellets) and 3.0 g of PCL (pellets) were placed in a bag and premixed, the mixture was mixed at 200°C using a twin-screw kneader to produce pellets. The obtained pellets were molded by an injection molding machine, and physical properties were evaluated.

(Test Example 30)

Production of Biomass Plastic Containing Paramylon Derivative P9

By using a twin-screw kneader, 30.0 g of the paramylon derivative P9 was mixed at 225°C to produce pellets. The obtained pellets were molded by an injection molding machine, and physical properties were evaluated.

(Test Example 31)

Production of Biomass Plastic Containing Paramylon Derivative P9 and Polycaprolactone (PCL) At Ratio of 70 : 30

After 21.0 g of the paramylon derivative P9 (pellets) and 9.0 g of PCL (pellets) were placed in a bag and premixed, the mixture was mixed at 200°C using a twin-screw kneader to produce pellets. The obtained pellets were molded by an injection molding machine, and physical properties were evaluated.

(Test Example 32)

Production of Biomass Plastic Containing Paramylon Derivative P9 and Polycaprolactone (PCL) At Ratio of 50 : 50

After 15.0 g of the paramylon derivative P9 (pellets) and 15.0 g of PCL (pellets) were placed in a bag and premixed, the mixture was mixed at 200°C using a twin-screw kneader to produce pellets. The obtained pellets were molded by an injection molding machine, and physical properties were evaluated.
Physical properties of the biomass plastic of each test example were measured and evaluated. The results are illustrated in Tables 4 to 7.

[Table 4]

| | | Test Examples | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Paramylon derivative | P1 | 80.0 | 90.0 | 100.0 | ---- | ---- | ---- | ---- | ---- | ---- | ---- | ---- | ---- | ---- | ---- |
| | P2 | ---- | ---- | ---- | ---- | ---- | 80.0 | 100.0 | ---- | ---- | ---- | ---- | ---- | ---- | ---- |
| | P3 | ---- | ---- | ---- | ---- | ---- | ---- | ---- | 83.0 | 86.0 | 90.0 | 100.0 | ---- | ---- | ---- |
| | P4 | ---- | ---- | ---- | 100.0 | ---- | ---- | ---- | ---- | ---- | ---- | ---- | ---- | ---- | ---- |
| | P5 | ---- | ---- | ---- | ---- | ---- | ---- | ---- | ---- | ---- | ---- | ---- | 70.0 | 80.0 | 100.0 |
| | P6 | ---- | ---- | ---- | ---- | 100.0 | ---- | ---- | ---- | ---- | ---- | ---- | ---- | ---- | ---- |
| Biodegradable resin | PBSA | 20.0 | 10.0 | ---- | ---- | ---- | 20.0 | ---- | 17.0 | 14.0 | 10.0 | ---- | 30.0 | 20.0 | ---- |
| Charpy impact strength (kJ/m$^2$) | | 37 | 8.9 | 0.9 | 3.2 | 6.5 | 16 | 1.1 | 14 | 11 | 6.9 | 1.2 | 1.3 | *1 | ---- |
| Flexural Strength (Mpa)2.4mmt | | 24 | 35 | 49 | 42 | 43 | 14 | 37 | 19 | 23 | 28 | 36 | 14 | 17 | *2 |
| Flexural Modulus (GPa)2.4mmt | | 0.60 | 0.91 | 1.2 | 1.1 | 1.0 | 0.238 | 1 | 0.55 | 0.61 | 0.77 | 1.1 | 0.18 | 0.40 | ---- |
| Strain at Break (%) | | >10 | >10 | >10 | >10 | >10 | >10 | >10 | >10 | >10 | >10 | >10 | >10 | 9.4 | ---- |
| Thermoplasticity MFR (g/10min) 5kg,210°C | | 7.0 (190°C) | 38 | 27 | 58 | 18 | 1.6 | 3.8 | 2 | 1.6 | 1.9 | 2 | 27 | 12 | ---- |
| Tg(°C)DSC | | 77 | 84 | 103 | 95 | 95 | ---- | 117 | ---- | 66 | ---- | 101 | ---- | ---- | ---- |
| BOD test decomposition rate (relative to cellulose) | | 11.2% | 15.7% | 15.6% | 0.72% | 0% | ---- | ---- | ---- | ---- | 13% | 44.8% | ---- | ---- | 0.26% |
| Appearance of molded product | | ---- | ---- | ---- | ---- | ---- | Transparent | Transparent | Transparent | Transparent | Transparent | Transparent | ---- | ---- | ---- |

*1 Damaged during notching
*2 Damaged during molding

Only the paramylon derivatives (P1 to P4) having a relatively low degree of substitution had low Charpy impact strenght (Test Examples 3, 4 ,7 and 11). Therefore, when the degree of substitution of the paramylon derivative was increased (P6), Charpy impact strength was increased, whereas marine biodegradability was not obtained (Test Example 5). As described above, it was difficult to achieve all the marine biodegradability, mechanical strength, and thermoplasticity with the paramylon derivative alone. Therefore, in the present disclosure, an attempt has been made to from an alloy with a biodegradable resin (PBSA) using a paramylon derivative having a relatively low degree of substitution.

As compared with Test Example 3 in which only the paramylon derivative (P1) was used, it was found that in Test Examples 1 and 2 in which the biodegradable resin (PBSA) was compounded with the paramylon derivative (P1), Charpy impact strength and thermoplasticity were improved, and marine biodegradability was also maintained. When P2 and P3 were used as the paramylon derivatives, similar effects were obtained (Test Examples 6 to 11).

It was found that, when the content of the paramylon derivative was 70 to 90 mass%, and the content of the biodegradable resin was 10 to 30 mass% with respect to 100 mass% of the total content of the paramylon derivative and the biodegradable resin, all the marine biodegradability and favorable mechanical strength and thermoplasticity were achieved.

When the degree of long-chain substitution of the paramylon derivative was too low (P5), sufficient mechanical strength was not obtained even when the paramylon derivative was alloyed with the biodegradable resin (Test Examples 12 to 14). It was found that the degree of long-chain substitution of the paramylon derivative is preferably equal to or more than 0.6, and the total degree of substitution is preferably 1.6 to 2.3.

[Table 5]

| | | Test Examples | | | | | | | | |
|---|---|---|---|---|---|---|---|---|---|---|
| | | 26 | 27 | 28 | 29 | 30 | 31 | 33 | 34 | 32 |
| Paramylon derivative | P7 | 100.0 | 90.0 | ---- | ---- | ---- | ---- | ---- | ---- | ---- |
| | P8 | ---- | ---- | 100.0 | 90.0 | ---- | ---- | ---- | ---- | ---- |
| | P9 | ---- | ---- | ---- | ---- | 100.0 | 70.0 | ---- | ---- | 50.0 |
| Biodegradable resin | PCL | ---- | 10.0 | ---- | 10.0 | ---- | 30.0 | ---- | 20.0 | 50.0 |
| Charpy impact strength ($kJ/m^2$) | | ---- | 4.9 | 1.2 | 35 | 3.8 | 9.8 | 0.7 | 50 | 4.8 |
| Flexural Strength (Mpa)2.4mmt | | ---- | 43 | 26 | 15 | 36 | 35 | 36 | 4.6 | ---- |
| Flexural Modulus (GPa)2.4mmt | | ---- | 1.2 | 0.73 | 0.24 | 1.0 | 0.94 | 0.79 | 0.1 | ---- |
| Strain at Break (%) | | ---- | >10 | >10 | >10 | >10 | >10 | >10 | >10 | ---- |
| Thermoplasticity MFR(g/10min) 5kg.210°C | | ---- | 7.5 | ---- | ---- | ---- | ---- | ---- | 1.9 | ---- |
| Thermoplasticity NFR(g/10min) 10kg,230 °C | | ---- | ---- | 21 | 39 | 14 | 1.9 | ---- | ---- | 9.2 |
| Tg(°C)DSC | | ---- | ---- | 98 | n.d. | 141 | n.d. | 158 | n.d. | n.d. |
| BOD test decomposition rate (relative to cellulose) | | 25.5% | 18.5% | 7.2% | 17.7% | ---- | 27.5% | 24.3% | ---- | 62.6% |
| Appearance of molded product | | Not moldable | Transparent | Transparent | Transparent | Transparent | Cloudy white | Cloudy white | Cloudy white | Cloudy white |

Only the paramylon derivatives (P7 to P9) having a relatively low degree of substitution had low Charpy impact strength (Test Examples 26, 28, and 30).

Therefore, an attempt was made to form an alloy with a biodegradable resin (PCL) using a paramylon derivative having a relatively low degree of substitution. In Test Examples 27, 29 and 31, it was found that Charpy impact strength was improved and marine biodegradability was also maintained. It was found that, when the content of the paramylon derivative was 70 to 90 mass%, and the content of the biodegradable resin was 10 to 30 mass% with respect to 100 mass% of the total content of the paramylon derivative and the biodegradable resin, all the marine biodegradability and favorable mechanical strength and thermoplasticity were achieved.

On the other hand, in Test Example 32 in which 50% of a biodegradable resin (PCL) was added, marine biodegradability was maintained, but the molded body became cloudy, and the Charpy impact strength decreased. It is considered that the crystallization of the biodegradable resin proceeded due to the increase in the blending ratio of the biodegradable resin, and the Charpy impact strength thus decreased.

[Table 6]

| | | Test Examples | | | | | |
|---|---|---|---|---|---|---|---|
| | | 15 | 16 | 17 | 18 | 19 | 20 |
| Cellulose derivative | C1 | 80.0 | 100.0 | ---- | ---- | ---- | ---- |
| | C2 | ---- | ---- | 80.0 | 100.0 | ---- | ---- |
| | C3 | ---- | ---- | ---- | ---- | 80.0 | 100.0 |
| Biodegradable resin | PBSA | 20.0 | ---- | 20.0 | ---- | 20.0 | ---- |
| Charpy impact strength ($kJ/m^2$) | | 46 | 1.1 | 10 | 1.3 | 0.7 | ---- |
| Flexural Strength (Mpa)2.4mmt | | 15 | 46 | 29 | 61 | 48 | 33 |
| Flexural Modulus (GPa) 2.4mmt | | 0.26 | 1.60 | 1 | 2.1 | 1.7 | 2.8 |
| Strain at Break (%) | | >10 | >10 | >10 | >10 | 3.2 | 1.2 |
| Thermoplasticity MFR(g/10min)5kg,210°C | | ---- | ---- | 29.0 | 3.9 | Not measura ble | Not measura ble |
| Tg(°C)DSC | | ---- | 150 | ---- | 185 | ---- | ---- |
| Appearance of molded product | | Transparent | Transparent | Transparent | Transparent | Transparent | Transparent |

Only the cellulose derivative (C1 or C2) having a relatively low degree of substitution had low Charpy impact strength (Test Examples 16 and 18). Therefore, when the degree of substitution of the cellulose derivative was increased (C3), thermoplasticity was not obtained (Test Example 20). As described above, it is difficult to achieve all the marine biodegradability, mechanical strength, and thermoplasticity with the cellulose derivative alone. Therefore, in the present disclosure, alloying with a biodegradable resin was attempted using a cellulose derivative having a relatively low degree of substitution.

As compared with Test Example 18 in which the cellulose derivative (C2) was used alone, it was found that in Test Example 17 in which the biodegradable resin was compounded with the cellulose derivative (C2), Charpy impact strength and thermoplasticity were improved. When C1 was used as the cellulose derivative, a similar effect was obtained (Test Examples 15 and 16).

It was found that when the content of the cellulose derivative was 70 to 90 mass% with respect to 100 mass% of the total content of the cellulose derivative and the biodegradable resin, and the content of the biodegradable resin was 10 to 30 mass%, all the marine biodegradability, favorable mechanical strength, and thermoplasticity were achieved.

When the degree of short-chain substitution of the cellulose derivative was too high (C3), sufficient mechanical strength and thermoplasticity were not obtained even when the cellulose derivative was alloyed with the biodegradable resin (Test Examples 19 and 20). When a cellulose derivative having a total degree of substitution of less than 2.4 was used, the thermoplasticity was reduced and alloying could not be achieved. In the cellulose derivative, it was found that the degree of long-chain substitution is preferably equal to or more than 0.6, and the total degree of substitution is preferably 2.4 to 2.6.

[Table 7]

| | | Test Examples | | | | | | | |
|---|---|---|---|---|---|---|---|---|---|
| | | 6 | 21 | 22 | 7 | 23 | 24 | 25 | 11 |
| Paramylon derivative | P2 | 80.0 | 80.0 | 95.0 | 100.0 | ---- | ---- | ---- | ---- |
| | P3 | ---- | ---- | ---- | ---- | 80.0 | 80.0 | 80.0 | 100.0 |
| Biodegradable resin | PBSA | 20.0 | ---- | ---- | ---- | ---- | ---- | ---- | ---- |
| | PCL | ---- | 10.0 | 5.0 | ---- | 20.0 | ---- | ---- | ---- |
| | PBAT | ---- | ---- | ---- | ---- | ---- | 20.0 | ---- | ---- |
| | PLA | ---- | ---- | ---- | ---- | ---- | ---- | 20.0 | ---- |
| Charpy impact strength ($kJ/m^2$) | | 16 | 11 | 1.2 | 1.1 | 18 | 0.81 | 0.75 | 1.2 |
| Flexural Strength (Mpa) 2.4mmt | | 14 | 22 | 30 | 37 | 13 | 29 | 43 | 36 |
| Flexural Modulus (GPa) 2.4mmt | | 0.238 | 0.65 | 0.94 | 1 | 0.17 | 0.8 | 1.4 | 1.1 |
| Strain at Break (%) | | >10 | >10 | >10 | >10 | >10 | >10 | >10 | >10 |
| Thermoplasticity MFR(g/10min)5kg,210°C | | 1.6 | 8.3 | 4.5 | 3.8 | 2.4 | 5.8 | 12 | 2 |
| Tg (C) DSC | | ---- | 109 | 112 | 117 | 151 | 91 | 58 | 101 |
| BOD test decomposition rate (relative to cellulose)) | | ---- | ---- | ---- | ---- | 18.3% | ---- | ---- | ---- |
| Appearance of molded product | | ---- | Transparent | Transparent | ---- | Transparent | Cloudy white | Cloudy white | ---- |

Comparison of Test Example 7 with Test Examples 6, 21, and 22 and comparison of Test Example 11 with Test Example 23 have confirmed that Charpy impact strength and thermoplasticity are improved by using 10 to 30 mass% of polybutylene succinate adipate (PBSA) or polycaprolactone (PCL) as the biodegradable resin. On the other hand, comparison between Test Example 11 and Test Examples 24 and 25 has confirmed that when polybutylene adipate terephthalate (PBAT) or polylactic acid (PLA) was used as the biodegradable resin, the Charpy impact strength was not improved.

While the present disclosure has been particularly shown and described with reference to example embodiments thereof, the present disclosure is not limited to these example embodiments. It will be understood by those of ordinary skill in the art that various changes in form and details can be made therein without departing from the spirit and scope of the present disclosure as defined by the claims. And each example embodiment can be appropriately combined with other example embodiments.

(Supplementary note 1)

A polysaccharide-based biomass plastic composed of:

a cellulose derivative in which hydrogen atoms of hydroxy groups of cellulose are substituted with a long-chain component that is a saturated aliphatic acyl group having 6 to 18 carbon atoms and a short-chain component that is an acyl group having 2 or 3 carbon atoms, a total of a degree of substitution with the short-chain component ($DS_{Sh}$) and a degree of substitution with the long-chain component ($DS_{Lo}$) being within a range of 2.4 to 2.6, and the degree of substitution with the long-chain component ($DS_{Lo}$) being equal to or more than 0.6; and
a biodegradable resin that is one or more selected from the group consisting of polybutylene succinate, polybutylene succinate adipate, and polycaprolactone, wherein
a content of the cellulose derivative is 70 to 90 mass% with respect to 100 mass% of a total content of the cellulose derivative and the biodegradable resin, and
a content of the biodegradable resin is 10 to 30 mass% with respect to 100 mass% of the total content of the cellulose derivative and the biodegradable resin.

(Supplementary note 2)

A polysaccharide-based biomass plastic composed of:

a paramylon derivative in which hydrogen atoms of hydroxy groups of paramylon are substituted with a long-chain component that is a saturated aliphatic acyl group having 6 to 18 carbon atoms and a short-chain component that is an acyl group having 2 or 3 carbon atoms, a total of a degree of substitution with the short-chain component ($DS_{Sh}$) and a degree of substitution with the long-chain component ($DS_{Lo}$) being within a range of 1.6 to 2.3, and the degree of substitution with the long-chain component ($DS_{Lo}$) being equal to or more than 0.6; and

a biodegradable resin that is one or more selected from the group consisting of polybutylene succinate, polybutylene succinate adipate, and polycaprolactone, wherein

a content of the paramylon derivative is 70 to 90 mass% with respect to 100 mass% of a total content of the paramylon derivative and the biodegradable resin, and

a content of the biodegradable resin is 10 to 30 mass% with respect to 100 mass% of the total content of the paramylon derivative and the biodegradable resin.

(Supplementary note 3)

The polysaccharide-based biomass plastic according to supplementary note 1 or 2, wherein the long-chain component is a hexanoyl group.

(Supplementary note 4)

The polysaccharide-based biomass plastic according to any of the preceding supplementary notes, wherein the short-chain component is an acetyl group.

(Supplementary note 5)

The polysaccharide-based biomass plastic according to any of the preceding supplementary notes, wherein a biodegradation value is equal to or more than 10% (relative to cellulose) after 3 months in a BOD test using seawater.

(Supplementary note 6)

The polysaccharide-based biomass plastic according to any of the preceding supplementary notes, wherein a Charpy impact strength is 5 $kJ/m^2$ or more.

(Supplementary note 7)

A molding resin composition comprising the polysaccharide-based biomass plastic according to any of the preceding supplementary notes.

(Supplementary note 8)

A molded body formed using the molding resin composition according to supplementary note 7.

(Supplementary note 9)

A method for producing a polysaccharide-based biomass plastic, the method comprising:

preparing a cellulose derivative or a paramylon derivative by acylating hydroxy groups of cellulose or paramylon through reaction of the cellulose or the paramylon dispersed in a solvent with a short-chain acylating agent that is one or more selected from the group consisting of a fatty acid halide and an acid anhydride, each having 2 or 3 carbon atoms, and a long-chain acylating agent that is one or more selected from the group consisting of a saturated fatty acid halide and an acid anhydride, each having 6 to 18 carbon atoms, in presence of an acid scavenging component and under a heating condition; and

mixing the cellulose derivative or the paramylon derivative with a biodegradable resin to form an alloy.

## Claims

1. A polysaccharide-based biomass plastic composed of:

   a cellulose derivative in which hydrogen atoms of hydroxy groups of cellulose are substituted with a long-chain component that is a saturated aliphatic acyl group having 6 to 18 carbon atoms and a short-chain component that is an acyl group having 2 or 3 carbon atoms, a total of a degree of substitution with the short-chain component ($DS_{Sh}$) and a degree of substitution with the long-chain component ($DS_{Lo}$) being within a range of 2.4 to 2.6, and the degree of substitution with the long-chain component ($DS_{Lo}$) being equal to or more than 0.6; and
   a biodegradable resin that is one or more selected from the group consisting of polybutylene succinate, polybutylene succinate adipate, and polycaprolactone, wherein
   a content of the cellulose derivative is 70 to 90 mass% with respect to 100 mass% of a total content of the cellulose derivative and the biodegradable resin, and
   a content of the biodegradable resin is 10 to 30 mass% with respect to 100 mass% of the total content of the cellulose derivative and the biodegradable resin.

2. A polysaccharide-based biomass plastic composed of:

   a paramylon derivative in which hydrogen atoms of hydroxy groups of paramylon are substituted with a long-chain component that is a saturated aliphatic acyl group having 6 to 18 carbon atoms and a short-chain component that is an acyl group having 2 or 3 carbon atoms, a total of a degree of substitution with the short-chain component ($DS_{Sh}$) and a degree of substitution with the long-chain component ($DS_{Lo}$) being within a range of 1.6 to 2.3, and the degree of substitution with the long-chain component ($DS_{Lo}$) being equal to or more than 0.6; and
   a biodegradable resin that is one or more selected from the group consisting of polybutylene succinate, polybutylene succinate adipate, and polycaprolactone, wherein
   a content of the paramylon derivative is 70 to 90 mass% with respect to 100 mass% of a total content of the paramylon derivative and the biodegradable resin, and
   a content of the biodegradable resin is 10 to 30 mass% with respect to 100 mass% of the total content of the paramylon derivative and the biodegradable resin.

3. The polysaccharide-based biomass plastic according to claim 1, wherein the long-chain component is a hexanoyl group.

4. The polysaccharide-based biomass plastic according to claim 1, wherein the short-chain component is an acetyl group.

5. The polysaccharide-based biomass plastic according to claim 1, wherein a biodegradation value is equal to or more than 10% (relative to cellulose) after 3 months in a BOD test using seawater.

6. The polysaccharide-based biomass plastic according to claim 1, wherein a Charpy impact strength is equal to or more than 5 $kJ/m^2$.

7. A molding resin composition comprising the polysaccharide-based biomass plastic according to claim 1.

8. A molded body formed using the molding resin composition according to claim 7.

9. The polysaccharide-based biomass plastic according to claim 2, wherein the long-chain component is a hexanoyl group.

10. The polysaccharide-based biomass plastic according to claim 2, wherein the short-chain component is an acetyl group.

11. The polysaccharide-based biomass plastic according to claim 2, wherein a biodegradation value is equal to or more than 10% (relative to cellulose) after 3 months in a BOD test using seawater.

12. The polysaccharide-based biomass plastic according to claim 2, wherein a Charpy impact strength is equal to or more than 5 $kJ/m^2$.

**13.** A molding resin composition comprising the polysaccharide-based biomass plastic according to claim 2.

**14.** A molded body formed using the molding resin composition according to claim 13.

**15.** A method for producing a polysaccharide-based biomass plastic, the method comprising:

preparing a cellulose derivative or a paramylon derivative by acylating hydroxy groups of cellulose or paramylon through reaction of the cellulose or the paramylon dispersed in a solvent with a short-chain acylating agent that is one or more selected from the group consisting of a fatty acid halide and an acid anhydride, each having 2 or 3 carbon atoms, and a long-chain acylating agent that is one or more selected from the group consisting of a saturated fatty acid halide and an acid anhydride, each having 6 to 18 carbon atoms, in presence of an acid scavenging component and under a heating condition; and

mixing the cellulose derivative or the paramylon derivative with a biodegradable resin to form an alloy.

## INTERNATIONAL SEARCH REPORT

International application No.
**PCT/JP2024/031912**

### A. CLASSIFICATION OF SUBJECT MATTER

***C08L 1/14***(2006.01)i; ***C08L 5/00***(2006.01)i; ***C08L 67/02***(2006.01)i; ***C08L 67/04***(2006.01)i; ***C08L 101/16***(2006.01)i
FI: C08L1/14 ZBP; C08L5/00; C08L67/02; C08L67/04; C08L101/16

According to International Patent Classification (IPC) or to both national classification and IPC

### B. FIELDS SEARCHED

Minimum documentation searched (classification system followed by classification symbols)

C08L1/14; C08L5/00; C08L67/02; C08L67/04; C08L101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | WO 2017/115634 A1 (NEC CORPORATION) 06 July 2017 (2017-07-06)<br>claims, paragraphs [0038], [0061], [0134], examples A1-C1 | 15<br>1-14 |
| X<br>A | WO 2020/013232 A1 (NEC CORPORATION) 16 January 2020 (2020-01-16)<br>claims, paragraphs [0039], [0063], [0136], examples 1-12 | 15<br>1-14 |
| A | WO 2010/047351 A1 (FUJIFILM CORPORATION) 29 April 2010 (2010-04-29) | 1-15 |
| A | WO 2014/077340 A1 (NATIONAL INSTITUTE OF ADVANCED INDUSTRIAL SCIENCE AND TECHNOLOGY) 22 May 2014 (2014-05-22) | 1-15 |
| A | JP 2000-129035 A (MITSUBISHI GAS CHEMICAL COMPANY, INC.) 09 May 2000 (2000-05-09) | 1-15 |
| A | WO 2011/078272 A1 (FUJIFILM CORPORATION) 30 June 2011 (2011-06-30) | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 October 2024** | **29 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/031912**

| Patent document cited in search report | Publication date (day/month/year) | Patent family member(s) | Publication date (day/month/year) |
|---|---|---|---|
| WO 2017/115634 A1 | 06 July 2017 | US 2019/0010251 A1<br>claims, paragraphs [0044], [0071], [0132], examples A1-C1<br>JP 2021-193192 A | |
| WO 2020/013232 A1 | 16 January 2020 | US 2021/0340282 A1<br>claims, paragraphs [0060], [0088], [0150], examples 1-12<br>US 2023/0272123 A1 | |
| WO 2010/047351 A1 | 29 April 2010 | JP 2010-121121 A | |
| WO 2014/077340 A1 | 22 May 2014 | US 2015/0299339 A1<br>US 2018/0044440 A1<br>EP 2921504 A1 | |
| JP 2000-129035 A | 09 May 2000 | (Family: none) | |
| WO 2011/078272 A1 | 30 June 2011 | JP 2011-148976 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6029155 B